# FASCICULE DE BREVET EUROPEEN

(11) **EP 3 964 418 B1**
(45) Date de publication et mention de la délivrance du brevet: **23.08.2023**
(21) Numéro de dépôt: 21194887.2
(22) Date de dépôt: 03.09.2021
(51) Int. Cl.: B61C 5/00, F02N 11/08, B61C 17/12, B60T 13/26, B61H 9/00

(54) **ENGIN FERROVIAIRE ET PROCÉDÉ DE PILOTAGE D'UN TEL ENGIN**
EISENBAHNFAHRZEUG UND STEUERUNGSVERFAHREN EINES SOLCHEN FAHRZEUGS
RAILWAY VEHICLE AND METHOD FOR CONTROLLING SUCH A VEHICLE

(30) Priorité: 04.09.2020 FR 2009002
(43) Date de publication de la demande: 09.03.2022
(73) Titulaire: Colas Rail, 92400 Courbevoie (FR)
(72) Inventeur: HOURIEZ, Stéphane, 42370 RENAISON (FR)
(74) Mandataire: Jacobacci Coralis Harle

(56) Documents cités:
- AU-A1- 2019 226 299
- DE-A1- 19 549 259
- US-A1- 2002 188 397
- US-A1- 2009 312 894
- US-B2- 9 145 863
- US-B2- 9 174 655

## Description

### DOMAINE TECHNIQUE DE L'INVENTION

La présente invention concerne de manière générale le domaine ferroviaire.

Elle s'applique à un engin ferroviaire comportant des roues, des moyens de freinage des roues, et un groupe motopropulseur qui comprend un moteur à combustion interne de traction adapté à entraîner les roues en rotation.

Elle concerne plus particulièrement un procédé de pilotage d'un tel engin ferroviaire.

### ETAT DE LA TECHNIQUE

Les engins ferroviaires, tels que par exemple les locomotives, sont, pour une grande partie d'entre eux, propulsés à l'aide de moteurs électriques. Toutefois, des engins ferroviaires équipés de moteurs à combustion interne sont toujours employés afin d'accomplir des fonctions particulières, telles que la réparation des voies et des ballasts, le triage de wagons dans des zones dépourvues de caténaires, ou encore le fret.

Les moteurs à combustion interne équipant ces engins présentent des cylindrées très importantes afin de développer des puissances de l'ordre de plusieurs mégawatts nécessaires à l'accomplissement des fonctions précitées.

Il a été constaté que lorsqu'ils sont utilisés, ces engins passent en moyenne plus de la moitié de leur temps à l'arrêt avec le moteur à combustion interne au ralenti. Il s'ensuit une consommation inutile de carburant, ce qui a des conséquences pécuniaires (en terme de consommation en carburant et de maintenance) et environnementales (en terme d'émissions de polluants et d'émissions sonores).

Pour remédier à ces problèmes, il est déjà connu de commander automatiquement l'arrêt du moteur à combustion interne de l'engin ferroviaire lorsque plusieurs conditions sont remplies, par exemple dès que le moteur est au ralenti et que l'engin est à l'arrêt.

La demanderesse a toutefois observé que ces conditions ne permettent pas toujours d'assurer un arrêt du moteur à combustion interne à des moments pertinents, si bien que les conducteurs ont parfois tendance à désactiver la fonction d'arrêt automatique.

On connaît par ailleurs du document DE 195 49 259 A1 un véhicule automobile équipé d'un moteur à combustion interne et d'un moteur électrique dont l'une des fonctions consiste à amortir les irrégularités de rotation du vilebrequin et dont une autre fonction est de permettre de redémarrer le moteur à combustion interne.

Ce véhicule est équipé d'un système Stop&Start qui permet de commander l'arrêt du moteur de façon automatique lorsque le véhicule est à l'arrêt, que le moteur est au ralenti, que la charge du moteur est nulle, que le frein de service est activé, que la charge de la batterie est suffisante, et que la température moteur est suffisante. Le redémarrage est commandé lorsqu'un appui est détecté sur l'accélérateur ou qu'un rapport de vitesse est passé, ou lorsque la charge de la batterie ou la température du moteur est passée sous un seuil.

On connaît aussi un document US 9 145 863 82 qui décrit une locomotive équipée d'un système Stop&Start qui a la particularité d'être déconnectable à l'aide d'une télécommande (ce qui évite aux opérateurs en charge du triage de devoir régulièrement redémarrer les locomotives). Lorsqu'il est activé, ce système AESS est conçu pour commander l'arrêt automatique du moteur lorsque certaines conditions sont réunies (régime moteur faible, température d'huile ou de liquide de refroidissement élevée, pression d'huile élevée, pression d'air élevée) pendant une durée requise.

On connaît aussi un document US 2009/312894 A1 qui décrit une locomotive équipé d'un système de démarrage automatique du moteur à une heure souhaitée, tôt le matin. Il est donné deux exemples où un redémarrage automatique du moteur est en outre commandé par le système : si l'état de charge de la batterie a chuté et si la pression d'air du compresseur est tombée en dessous d'une valeur souhaitée.

On connaît aussi du document AU 2019 226 299 A1 un procédé de pilotage d'une locomotive comportant des étapes de mesure de conditions de fonctionnement (régime moteur, charge de batterie, pression d'air...) et de commande automatique de l'arrêt ou du démarrage du moteur en fonction des données mesurées. Il est expliqué que la durée avant de commander l'arrêt automatique du moteur est par exemple de 15 minutes, mais qu'en variante elle peut être comprise entre 30 secondes et 10 minutes.

On connaît aussi du document US 2002/188397 A1 un système similaire selon lequel, si la locomotive est au ralenti depuis plus de 30 minutes, il est prévu de commander l'arrêt du moteur. L'idée dans ce document consiste à maintenir le moteur chaud lorsque les conditions extérieures sont contraignantes.

On connaît enfin du document US 9 174 655 82 une locomotive équipée d'un système Stop&Start conçu pour réduire la durée pendant laquelle leur moteur est maintenu au ralenti. Il est prévu que le système permette de commander l'arrêt automatique du moteur lorsque différentes conditions sont réunies (pression d'air, état de charge, température moteur, position de l'inverseur...).

### PRESENTATION DE L'INVENTION

La présente invention propose d'équiper l'engin ferroviaire d'un système d'arrêt automatique du moteur à combustion interne qui s'adapte bien aux problématiques rencontrées dans le domaine ferroviaire.

Plus particulièrement, on propose selon l'invention un procédé de pilotage d'un engin tel que défini dans la revendication 1.

Ainsi, grâce à l'invention, il est prévu de surveiller non seulement que l'engin ferroviaire est à l'arrêt, mais aussi que cet arrêt est requis par le conducteur en vérifiant que les moyens de freinage sont à l'état serré sur une longue durée. Ainsi, aucun arrêt du moteur à combustion interne ne sera commandé lorsque l'engin ferroviaire est prêt à redémarrer ou est à l'arrêt pour une durée réduite.

Le temps d'attente avant d'arrêter le moteur à combustion interne sera déterminé de façon à ne pas commander un arrêt trop rapide (la majorité des arrêts d'engin ferroviaire présentent en effet des durées peu importantes et ne nécessitent pas d'arrêt du moteur puisque le redémarrage du moteur est consommateur d'énergie et le bilan énergétique serait négatif).

L'invention a pour avantage de ne pas nécessiter l'ajout de capteurs sur l'engin ferroviaire. Seule l'unité de pilotage doit être reprogrammée pour mettre en oeuvre l'invention (un ou plusieurs boutons et voyants peuvent également être ajoutés dans l'habitacle de l'engin ferroviaire, notamment pour permettre au conducteur de commander un redémarrage rapide du moteur à combustion interne).

D'autres caractéristiques avantageuses et non limitatives du procédé de pilotage conforme à l'invention, prises individuellement ou selon toutes les combinaisons techniquement possibles, sont définies dans les revendications 2 à 12.

L'invention propose également un engin ferroviaire comportant des roues, un moteur à combustion interne de traction adapté à entraîner les roues en rotation, des moyens de freinage des roues, et une unité de pilotage programmée pour mettre en oeuvre un procédé de pilotage tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une locomotive conforme à l'invention ;
- la figure 2 est un schéma illustrant les étapes d'un procédé de pilotage de locomotive conforme à l'invention.

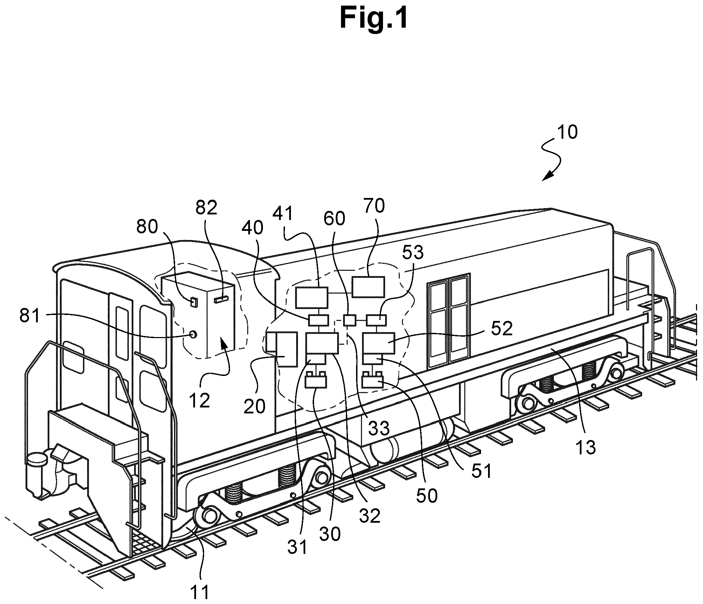

Sur la figure 1, on a représenté un engin ferroviaire, en l'espèce ici une locomotive 10 prévue pour rouler sur une voie de chemin de fer.

En variante, il pourrait plutôt s'agir d'un locotracteur ou d'un engin de travaux ferroviaires ou encore d'un engin rail-route.

Classiquement, cette locomotive comporte des roues 11, un châssis 13, et un habitacle 12 délimitant une cabine de conduite pour un conducteur.

Les principaux éléments d'une telle locomotive 10 étant bien connus, ils ne seront pas ici décrits en détail. On pourra seulement décrire brièvement certains organes de la locomotive pour une meilleure compréhension de l'invention.

La locomotive 10 comporte un circuit électrique pour l'alimentation en courant de ses différents composants électriques et électroniques. Ce circuit électrique comporte de préférence au moins deux batteries d'accumulateurs.

La locomotive 10 comporte aussi un circuit de communication permettant à différents composants de communiquer entre eux. Un tel circuit de communication peut par exemple se présenter sous la forme d'un bus de données CAN.

Pour lui permettre d'avancer ou de reculer, la locomotive 10 comporte un groupe motopropulseur qui comprend un moteur à combustion interne ci-après appelé moteur principal 32. Ce moteur principal 32 est ici adapté à délivrer une puissance de plusieurs mégawatts (ici une puissance de l'ordre de 20 MW). Il est prévu pour être démarré au moyen d'un démarreur 31 alimenté en courant électrique par une première des batteries d'accumulateurs, ci-après appelée batterie principale 30. Le groupe motopropulseur comporte également des moyens de transmission pour transmettre la puissance du moteur aux roues 11.

Le moteur principal 32 est de préférence équipé d'un système de refroidissement, qui comporte ici un circuit de liquide de refroidissement qui passe par le bloc-moteur du moteur principal 32, ainsi que par un premier échangeur de chaleur permettant de refroidir au besoin le liquide de refroidissement et par un second échangeur de chaleur, ci-après appelé réchauffeur 60, permettant de réchauffer au besoin le liquide de refroidissement. Ce réchauffeur 60 est ici formé par une ou plusieurs résistances électriques alimentées en courant par le circuit électrique de la locomotive 10.

Le moteur principal 32 comporte également un alternateur permettant, lorsque ce moteur principal 32 est démarré, d'alimenter en courant au moins une partie des composants connectés au circuit électrique de la locomotive.

La locomotive 10 comporte des moyens de freinage 70 pneumatiques des roues 11. Ces moyens de freinage 70 sont qualifiés de pneumatiques en ce sens qu'ils sont actionnés au moyen d'air comprimé.

A titre d'exemple, ces moyens de freinage 70 peuvent comporter des semelles adaptés à venir freiner par friction les essieux des roues 11, des cylindres de frein comprenant des pistons adaptés à actionner les semelles lorsqu'ils sont alimentés en air comprimé, et des distributeurs commandés pour gérer l'alimentation en air comprimé des cylindres de frein.

La locomotive 10 comporte alors aussi au moins une cuve 41 de réservoir d'air comprimé, et un compresseur 40 permettant de mettre sous pression l'air contenu dans la cuve 41. Cette cuve 41 est alors branchée sur les distributeurs des moyens de freinage 70 via un circuit de distribution d'air.

La locomotive 10 comporte également un générateur d'énergie électrique distinct des organes précités de la locomotive. Il pourrait s'agir de panneaux solaires situés au-dessus de l'habitacle de la locomotive.

Toutefois, ici, il s'agira d'un second moteur à combustion interne, ci-après appelé moteur auxiliaire 52. Ce moteur auxiliaire 52 est adapté à délivrer une puissance de plusieurs kilowatts, ici d'environ 5 kW. Il est prévu pour être démarré au moyen d'un démarreur 51 alimenté en courant électrique par une seconde des batteries d'accumulateurs, ci-après appelée batterie auxiliaire 50. Ce moteur auxiliaire 52 comporte également un alternateur 53 permettant d'alimenter en courant tout ou partie des composants électriques connectés au circuit électrique de la locomotive.

Dans son habitacle 12, la locomotive comporte classiquement des moyens de commande pour piloter les différents organes de la locomotive, notamment le groupe motopropulseur et les moyens de freinage 70.

En plus de ces moyens classiques, la locomotive comporte ici une interface homme-machine dédiée à une fonction d'arrêt automatique du moteur principal 52.

Cette fonction d'arrêt automatique, sur laquelle porte plus précisément l'invention, consiste à commander un arrêt automatique du moteur principal 32 (sans intervention du conducteur ou d'un quelconque individu) lorsque les conditions le permettent.

L'interface homme-machine est alors conçue pour permettre au conducteur de la locomotive d'agir sur le fonctionnement de cette fonction d'arrêt automatique.

Dans le mode de réalisation représenté sur la figure 1, elle comporte un voyant lumineux 80 vert adapté à clignoter à une vitesse variable avant que l'arrêt automatique ne soit commandé, un bouton poussoir 81 pour commander manuellement le redémarrage du moteur principal 32, et un levier 82 permettant d'activer ou désactiver la fonction d'arrêt automatique du moteur principal 52.

La locomotive 10 comporte également une unité de pilotage 20 pour la mise en oeuvre de cette fonction d'arrêt automatique du moteur principal 32. On pourrait prévoir que cette unité de pilotage 20 permette d'agir sur d'autres fonctions de la locomotive. Toutefois, ici, elle est exclusivement dédiée à la mise en oeuvre de la fonction d'arrêt automatique du moteur principal 32, ce qui permet de facilement moderniser une ancienne locomotive en l'équipant de cette unité de pilotage 20 et de l'interface homme-machine associée.

Ici, cette unité de pilotage 20 est installée à l'extérieur de l'habitacle 12, dans un caisson étanche de gestion du moteur auxiliaire 32.

L'unité de pilotage 20 comporte un processeur, une mémoire et différentes interfaces d'entrée et de sortie.

Grâce à ses interfaces, l'unité de pilotage 20 est branchée sur le réseau de communication de la locomotive 10 de façon à pouvoir lire sur ce réseau les informations mesurées par les capteurs équipant la locomotive 10. Parmi ces informations, il y a notamment :
- l'état des moyens de freinage 70 (cet état étant défini en fonction par exemple de la pression dans le circuit de distribution d'air et/ou de la pression dans les cylindres de frein),
- la vitesse V₁₀ de la locomotive 10,
- le régime R₃₂ et la charge C₃₂ du moteur principal 32,
- l'état arrêté ou démarré du compresseur 40,
- le niveau de charge SOC₃₀ de la batterie principale 30,
- la température T₃₃ du liquide de refroidissement, et
- la pression P₄₁ dans la cuve 41.

On notera que ces informations sont déjà disponibles sur le réseau de communication d'une locomotive 10 standard.

Le niveau de charge peut s'exprimer de différentes manières. Il peut s'agir d'un pourcentage indiquant la capacité restante de la batterie. Ici, ce niveau de charge sera formé par la tension en circuit ouvert aux bornes de la batterie d'accumulateurs (cette tension étant d'autant plus faible que la batterie est déchargée).

L'état des moyens de freinage 70 sera quant à lui défini comme étant :
- « desserré » si les moyens de freinage ne génèrent aucune force de friction sur les essieux,
- « serré » si les moyens de freinage exercent une force de friction maximale assurant le maintien en position de la locomotive 10 sur sa voie, et
- « intermédiaire » si les moyens de freinage exercent sur les essieux une force de friction non nulle et inférieure à la force de friction maximale précitée.

Egalement grâce à ses interfaces, l'unité de pilotage 20 peut émettre des instructions pour commander différents organes de la locomotive 10. Elle peut ainsi commander notamment l'arrêt et le démarrage des moteurs principal 32 et auxiliaire 52. Elle peut également commander des relais et interrupteurs du circuit électrique, pour commander l'alimentation en courant électrique du réchauffeur 60 ou de la batterie principale 30 plutôt via l'alternateur 53 du moteur auxiliaire 52 ou plutôt par l'alternateur du moteur principal 32.

Grâce à sa mémoire, l'unité de pilotage 20 mémorise une application informatique, constituée de programmes d'ordinateur comprenant des instructions dont l'exécution par le processeur permet la mise en oeuvre par l'unité de pilotage 20 du procédé décrit ci-après.

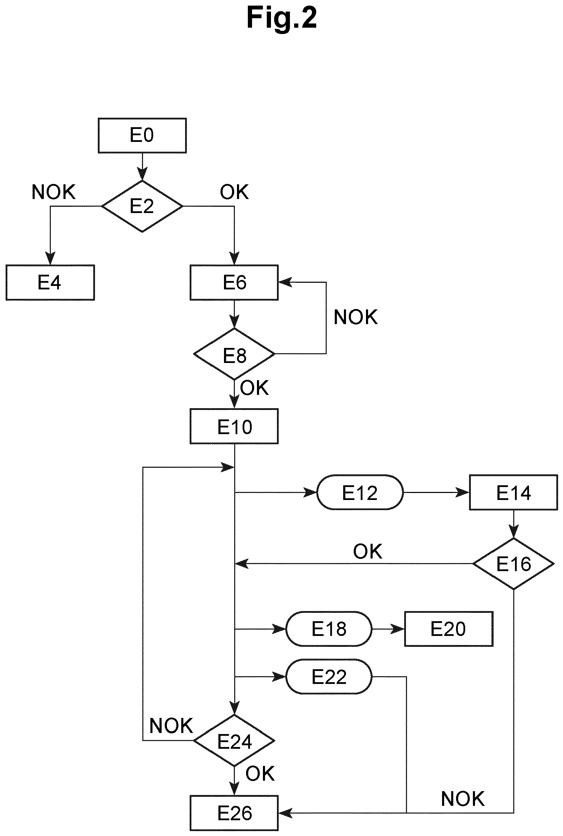

En référence à la figure 2, on peut maintenant décrire en détail un mode de réalisation d'un procédé de pilotage de la locomotive 10, et plus précisément un exemple de mise en oeuvre de la fonction d'arrêt automatique du moteur principal 32.

Au préalable, on pourra préciser que dans la suite de cet exposé, l'adjectif « prédéterminé » sera utilisé pour qualifier une valeur invariable, stockée dans la mémoire de l'unité de pilotage 20.

L'adjectif « déterminé » sera quant à lui utilisé pour qualifier une valeur éventuellement variable.

Le procédé est ici mis en oeuvre en boucle, et à pas de temps réguliers, dès le démarrage du moteur principal 32 (étape E0).

Alors, au cours d'une première étape E2, l'unité de pilotage 20 détermine la position du levier 82, dont on rappelle qu'il permet d'activer ou de désactiver la fonction d'arrêt automatique du moteur principal 52.

S'il est en position de désactivation, il est mis fin au procédé (étape E4).

S'il est en position d'activation, le procédé se poursuit en une étape E6 au cours de laquelle l'unité de pilotage 20 lit sur le réseau de communication l'ensemble des informations listées supra.

Puis, au cours d'une étape E8, l'unité de pilotage 20 détermine si les conditions rencontrées sont propices à la commande d'un arrêt automatique du moteur principal 32 en vue de réduire la consommation en carburant de la locomotive 10 et ses émissions polluantes.

Ici, les conditions sont jugées propices si plusieurs conditions d'arrêt sont remplies.

Ces conditions d'arrêt sont ici au nombre de six. En variante, elles pourraient être plus ou moins nombreuses.

La première condition d'arrêt, qui est incontournable, est que les moyens de freinage 70 soient commandés à l'état serré. En effet, une commande des moyens de freinage à l'état serré (en mode parking) est une première indication montrant que le conducteur souhaite effectivement maintenir la locomotive 10 dans sa position.

Une seconde condition d'arrêt est que la vitesse V₁₀ de la locomotive 10 soit nulle ou soit inférieure à un seuil de vitesse Sv prédéterminé. Ce seuil de vitesse est inférieur à 5 km/h. Cette seconde condition permet de détecter non seulement que les freins sont serrés mais que la locomotive s'est bien arrêté.

Une troisième condition d'arrêt est que le régime R₃₂ du moteur principal 32 soit inférieur à un seuil de régime S_{R} prédéterminé. Il s'agit ici de vérifier que le moteur principal tourne au ralenti, par exemple à moins de 600 tours par minute. En variante, il serait possible de considérer un autre paramètre pour vérifier que le moteur est au ralenti. Par exemple, on pourrait contrôler que la charge C₃₂ du moteur (c'est-à-dire la puissance demandée au moteur par le conducteur) est inférieure à un seuil prédéterminé.

Une quatrième condition d'arrêt est que le compresseur 40 soit à l'arrêt. Ce compresseur requiert en effet pour fonctionner une grande puissance mécanique, si bien qu'il est actionné directement par le moteur principal 32. Il n'est donc pas souhaitable d'arrêter le moteur principal 32 lorsque le compresseur fonctionne. En variante ou en complément, plutôt que considérer si le compresseur est actif ou non, il serait possible de considérer la pression dans la cuve 41 et d'interdire l'arrêt automatique du moteur si cette pression est inférieure à un seuil de pression prédéterminé (ce seuil pouvant prendre des valeurs diverses selon les locomotives, par exemple 5,5 bar) en deçà duquel le compresseur doit être mis en marche.

Une cinquième condition d'arrêt est que le niveau de charge SOC₃₀ de la batterie principale 30 soit supérieur à un seuil de charge S_{S1} prédéterminé. Ce seuil de charge est par exemple choisi de façon à correspondre à une charge de 80% de la batterie.

Enfin, une sixième condition d'arrêt est que la température T₃₃ du liquide de refroidissement soit supérieure à un seuil S_{T1} prédéterminé (par exemple 43°C). Il n'est en effet pas souhaitable d'arrêter le moteur principal 32 lorsqu'il est encore froid. En effet, un moteur fonctionne de manière optimale (en rejetant le moins de polluants possible) à une température supérieure à la température ambiante, si bien qu'il n'est pas avantageux de l'arrêter peu après qu'il a démarré.

D'autres conditions d'arrêt seraient envisageables. A titre d'exemple, il pourrait être souhaitable de contrôler que :
- le niveau de charge de la batterie auxiliaire 50 est supérieur à un seuil de charge prédéterminé, et/ou que
- la température des moyens de transmission, dont on rappelle qu'ils permettent de transmettre la puissance du moteur principal 32 vers les roues 11, soit supérieure à un seuil donné...

Ici, tant que les six conditions d'arrêt précitées ne sont pas simultanément et continument remplies pendant une durée déterminée, le procédé revient à l'étape E6. Cette durée déterminée sera ci-après appelée « durée avant arrêt ΔT1 ». Son calcul sera bien décrit dans la suite de cet exposé.

En revanche, si les six conditions d'arrêt précitées sont simultanément et continument remplies pendant la durée avant arrêt ΔT1, le procédé se poursuit en une étape E10.

Lors de cette étape, l'unité de pilotage 20 émet une requête d'arrêt du moteur principal 32.

De façon préférentielle, avant de commander cet arrêt, l'unité de pilotage 20 va avertir le conducteur qu'un arrêt automatique du moteur principal 32 va survenir.

L'intérêt est double. Le premier intérêt est d'éviter de surprendre le conducteur. Le second intérêt est de laisser le temps au conducteur de suspendre la procédure d'arrêt automatique s'il estime que cet arrêt n'est pas pertinent.

A titre d'exemple, si, à un feu rouge, on lui indique que le feu repassera au vert dans 2 minutes, il peut ainsi suspendre la procédure. Pour cela, il lui suffit ici d'appuyer sur le voyant clignotant 80. Lorsqu'il appuie sur ce voyant, le procédé retourne à l'étape E6.

De préférence, on limitera le nombre d'appuis consécutifs sur le voyant, par exemple à deux, de façon que le conducteur ne puisse pas abuser de cette possibilité de suspendre la procédure d'arrêt automatique.

On notera ici que le voyant clignotant 80 clignotera avant l'arrêt du moteur sur une durée supérieure à 5 secondes, de préférence sur une durée d'une minute. Le clignotement sera de plus en plus rapide pour avertir le conducteur de l'imminence de l'arrêt du moteur principal 32.

L'étape E10 d'arrêt du moteur principal 32 est suivie, d'une part, d'une opération de surveillance des paramètres mesurés sur la locomotive, et, d'autre part, d'une étape E24 consistant à contrôler si un appui est exercé sur le bouton poussoir 81 pour commander manuellement le redémarrage du moteur principal 32.

Tant qu'aucun appui n'est détecté, la surveillance des paramètres mesurés se poursuit. En revanche, dès qu'un appui est détecté, l'unité de pilotage 20 émet une requête de redémarrage du moteur principal 32 à destination du démarreur 31 (étape E26).

L'opération de surveillance des paramètres mesurés consiste à déterminer si un démarrage automatique du moteur principal 32 ou du moteur auxiliaire 52 est nécessaire.

A ce stade, on pourra noter que si des paramètres indiquent que la situation dans laquelle la locomotive se trouve ne peut pas perdurer (par exemple parce que la température du liquide de refroidissement baisse trop), l'unité de pilotage 20 ne va pas nécessairement commander le redémarrage du moteur principal 32. Au contraire, elle va procéder autrement dès que cela sera possible.

On peut décrire un mode de réalisation de cette opération de surveillance.

Cette opération de surveillance comporte ici trois étapes E12, E18, E22 simultanée de contrôle de paramètres.

La première étape E12 consiste à vérifier que le niveau de charge SOC₃₀ de la batterie principal 30 reste suffisamment élevé pour permettre un redémarrage du moteur principal 32. En effet, une fois arrêté, différents organes continuent de consommer de l'énergie électrique, ce qui est susceptible de faire baisser le niveau de charge SOC₃₀ de la batterie principal 30.

En pratique, l'unité de pilotage 20 surveille alors la tension aux bornes de la batterie principale 30. Dans l'éventualité où la tension aux bornes de la batterie principale 30 passe sous un seuil S_{S2} prédéterminé, l'unité de pilotage 20 commande le démarrage du moteur auxiliaire 52 plutôt que celui du moteur principal, puisque le moteur auxiliaire consomme moins de carburant et permet, grâce à son alternateur 53, de recharger la batterie principale 30.

A l'étape E16, l'unité de pilotage vérifie que le moteur auxiliaire 52 a bien démarré et que son alternateur fonctionne. Si tel est le cas, le procédé se poursuit (étape E24). Dans le cas contraire, l'unité de pilotage émet une requête de redémarrage du moteur principal 32 à destination du démarreur 31 (étape E26)

La seconde étape E18 de l'opération de surveillance consiste à vérifier que la température du liquide de refroidissement du moteur principal 32 ne passe pas sous un seuil S_{T2} prédéterminé (de l'ordre de 40°C par exemple). Dans l'éventualité où ce serait le cas, l'unité de pilotage 20 commande le démarrage du réchauffeur 60.

La troisième étape E22 de l'opération de surveillance consiste à vérifier que la pression P₄₁ dans la cuve 41 est suffisante, c'est-à-dire qu'elle ne passe pas sous un seuil S_{P} prédéterminé en deçà duquel le compresseur 40 va devoir être activé. Dans l'éventualité où ce serait le cas, l'unité de pilotage 20 commande cette fois le démarrage du moteur principal 32, seul susceptible d'actionner le compresseur 40.

Ici encore, pour ne pas surprendre le conducteur, on peut prévoir que le voyant soit piloté pour clignoter quelques secondes avant que le moteur principal soit automatiquement démarré.

A ce stade, on peut décrire comment est déterminée la durée avant arrêt ΔT1, dont on rappelle qu'elle correspond au temps pendant lequel les conditions d'arrêt doivent toutes être satisfaites pour que l'arrêt du moteur principal 32 soit commandé automatiquement.

Le mode de calcul de cette durée avant arrêt ΔT1 est ici issu d'une campagne de mesures réalisée sur plusieurs locomotives afin d'étudier le temps moyen qu'une locomotive restait à l'arrêt et la fréquence de chaque type d'arrêt. Il en a été déduit que les arrêts courts sont les plus fréquents, mais que les arrêts longs sont ceux qui génèrent le plus de pertes à l'année.

Il a été calculé que commander un arrêt automatique du moteur principal après durée avant arrêt ΔT1 de 8 minutes permettrait de diminuer de 75% la consommation des moteurs en carburant lorsqu'ils fonctionnent au ralenti.

Ceci étant dit, on pourrait donc envisager que la durée avant arrêt ΔT1 soit fixe et comprise entre 4 et 15 minutes, par exemple égale à 8 minutes.

Toutefois, il est préférable d'utiliser une durée avant arrêt ΔT1 qui soit variable.

On peut alors décrire plusieurs modes de réalisation permettant de déterminer cette durée avant arrêt ΔT1 variable.

Dans un premier mode, la durée avant arrêt ΔT1 est calculée en fonction des temps d'arrêts moyens de la locomotive depuis un moment particulier (de la journée, de la semaine ou du mois).

En effet, la locomotive 10 est conçue pour accomplir principalement trois fonctions particulières :
- la réparation des voies et des ballasts,
- le triage de wagons pour composer des trains, et
- le fret.

Les temps d'arrêts moyens ne sont pas les mêmes selon que la locomotive accomplie l'une ou l'autre de ces fonctions.

A titre d'exemple, dans le cas du fret, la locomotive fait un temps d'arrêt très long lors du chargement des wagons de marchandise. Dans le cas du triage, les temps d'arrêt sont beaucoup plus courts. Enfin, dans le cas de la réparation de voies, les temps d'arrêt sont variables.

Généralement, une locomotive accomplie une seule et même fonction pendant toute une journée. L'idée est donc de détecter le type de fonction accomplie en début de journée de travail, puis d'en déduire une durée avant arrêt ΔT1 optimale, valable seulement pour l'ensemble de la journée de travail.

En pratique, l'unité de pilotage 20 est programmée pour que, chaque matin, au premier démarrage de la locomotive 10, la durée avant arrêt ΔT1 soit égale à une valeur prédéterminée, par exemple 4 minutes.

Ainsi, lorsque la locomotive 10 sera à l'arrêt pendant 4 minutes avec toutes les conditions d'arrêt remplies, le moteur principal 32 sera automatiquement arrêté. Lorsqu'il sera redémarré, l'unité de pilotage 20 pourra stocker la durée totale ΔT2 de l'arrêt de la locomotive 10 dans un premier registre de sa mémoire (l'ensemble de ces registres étant effacé en début de journée de travail).

Ainsi, si la durée totale ΔT2 du premier arrêt de la locomotive était court (égal à 5 minutes par exemple, ce qui signifie que le moteur s'est arrêté une minute seulement), la nouvelle durée avant arrêt ΔT1 utilisée lors du prochain arrêt de la locomotive 10 sera plus longue, par exemple égale à 5 minutes.

Plus précisément, à chaque nouvel arrêt du moteur principal 32, une nouvelle durée totale ΔT2 est stockée dans un nouveau registre de la mémoire. Alors, la nouvelle durée avant arrêt ΔT1 utilisée pour l'arrêt suivant de la locomotive 10 sera déterminée en fonction de toutes les durées totale ΔT2 stockée dans les registres de la mémoire.

A titre d'exemple, l'unité de pilotage pourra faire la moyenne des durées totales ΔT2 stockées dans sa mémoire, puis calculer une nouvelle durée avant arrêt ΔT1 qui sera d'autant plus longue que la moyenne calculée sera courte.

En règle générale, la durée avant arrêt ΔT1 pourra prendre une valeur comprise entre 4 et 20 minutes.

Dans un second mode, la durée avant arrêt ΔT1 est déterminée en fonction de l'énergie requise pour redémarrer le moteur à combustion interne 32.

Plus précisément ici, la durée avant arrêt ΔT1 est choisie égale au temps qui sera nécessaire pour ramener, après un redémarrage du moteur, le niveau de charge de la batterie d'accumulateurs à son niveau initial (avant le redémarrage). L'idée est ici de tendre vers un bilan écologique qui soit positif dans la majeure partie des cas.

A titre d'exemple, si le démarreur consomme 1100 A pendant 6 s en moyenne pour redémarrer le moteur à combustion interne 32, ce qui signifie qu'il faudra 8 minutes pour recharger la batterie d'accumulateurs, il est choisi de n'arrêter le moteur à combustion interne de façon automatique que si le temps d'arrêt de la locomotive dépasse 8 minutes.

En effet, d'un point de vue statistique, il a été remarqué que la durée avant arrêt ΔT1 idéale est corrélée à la durée de recharge de la batterie d'accumulateurs.

Dans un troisième mode, il sera possible de combiner les deux modes précités, en déterminant la durée avant arrêt ΔT1 en fonction non seulement de l'énergie requise pour redémarrer le moteur à combustion interne 32, mais aussi des temps d'arrêts moyens de la locomotive depuis un moment particulier (de la journée, de la semaine ou du mois).

Dans une variante, on pourrait offrir au conducteur la possibilité d'allonger la durée avant arrêt ΔT1, en appuyant sur un bouton pour l'allonger d'une durée prédéterminée, par exemple de 3 minutes.

Dans un mode de réalisation préféré de l'invention, l'habitacle 12 de la locomotive est climatisé.

Grâce à l'invention, la climatisation de l'habitacle 12 pourra ne pas être interrompue à l'arrêt automatique du moteur principal 32.

En effet, le climatiseur pourra être alimenté en courant tout d'abord par la batterie principale 30. Puis, dès que le niveau de charge de cette dernière sera considéré trop faible, le démarrage automatique du moteur auxiliaire 52 permettra d'alimenter en courant le climatiseur. On notera que pour cela, le moteur auxiliaire 52 et son alternateur 53 seront dimensionnés pour fournir une puissance électrique supérieure à la puissance électrique consommée par le climatiseur, ce qui permettra de simultanément alimenter le climatiseur et recharger la batterie principale 30.

Dans un autre mode de réalisation préféré de l'invention, les unités de pilotage 20 de plusieurs locomotives du type précité sont adaptés à communiquer ensemble lorsque ces locomotives sont attachées ensemble au sein d'un même train.

Lorsque les locomotives 10 sont ainsi associées, elles sont connectées ensemble par câbles électriques. En outre, les circuits d'air comprimé de ces locomotives sont également branchés les uns aux autres ce qui assure une pression identique dans ces circuits.

Les unités de pilotage 20 sont alors programmées pour fonctionner indépendamment les unes des autres, de la même manière que précitée, à une différence près. Cette différence est que, lorsque la pression d'air dans les circuits d'air comprimé des locomotives 10 passe sous un seuil de pression (étape E22), seul le compresseur de l'une des locomotives 10 peut être utilisé pour augmenter cette pression, ce qui permet de ne devoir redémarrer qu'un seul des moteurs principaux des locomotives 10.

## Revendications

1. Procédé de pilotage d'un engin ferroviaire (10) comportant un moteur à combustion interne (32) de traction de l'engin ferroviaire (10), un démarreur adapté à démarrer le moteur à combustion interne (32), une batterie d'accumulateurs adaptée à fournir de l'énergie électrique au démarreur, et des moyens de freinage (70) des roues de l'engin ferroviaire (10), les moyens de freinage (70) pouvant être commandés dans un état desserré, un état serré ou dans tout état intermédiaire entre l'état serré et l'état desserré, le procédé comportant, lorsque le moteur à combustion interne (32) est démarré, des étapes de :
- acquisition de l'état des moyens de freinage (70), et de
- commande d'un arrêt automatique du moteur à combustion interne (32) si au moins une condition d'arrêt est remplie pendant une durée avant arrêt (ΔT1) déterminée, ladite au moins une condition d'arrêt étant que les moyens de freinage (70) soient commandés à l'état serré,
**caractérisé en ce que** ladite durée avant arrêt (ΔT1) est déterminée en fonction de la durée nécessaire pour recharger la batterie d'accumulateurs après qu'elle a été déchargée pour redémarrer le moteur à combustion interne (32).

2. Procédé de pilotage selon la revendication 1, dans lequel une autre condition d'arrêt est que la vitesse (V₁₀) de l'engin ferroviaire (10) soit nulle ou soit inférieure à un seuil (Sv) prédéterminé.

3. Procédé de pilotage selon l'une des revendications 1 et 2, dans lequel une autre condition d'arrêt est que le régime (R₃₂) et/ou la charge (C₃₂) du moteur à combustion interne (32) soit inférieur à un seuil (S_{R}, S_{C}) prédéterminé.

4. Procédé de pilotage selon l'une des revendications 1 à 3, dans lequel, les moyens de freinage (70) étant alimentés en air comprimé par au moins un compresseur (40) via au moins un réservoir d'air (41) et un circuit d'air, une autre condition d'arrêt est que chaque compresseur (40) soit à l'arrêt ou que la pression (P₄₁) dans le réservoir d'air (41) ou dans le circuit d'air soit supérieure à un seuil prédéterminé.

5. Procédé de pilotage selon l'une des revendications 1 à 4, dans lequel, le moteur à combustion interne (32) étant équipé d'un démarreur (31) alimenté en courant électrique par une batterie d'accumulateurs (30), une autre condition d'arrêt est que le niveau de charge (SOC₃₀) de ladite batterie d'accumulateurs (30) soit supérieur à un seuil (S_{S1}) prédéterminé.

6. Procédé de pilotage selon l'une des revendications 1 à 5, dans lequel, le moteur à combustion interne (32) étant équipé d'un circuit de liquide de refroidissement (33), une autre condition d'arrêt est que la température (T₃₃) du liquide de refroidissement soit supérieure à un seuil (S_{T1}) prédéterminé.

7. Procédé de pilotage selon l'une des revendications 1 à 6, dans lequel, après chaque arrêt automatique du moteur à combustion interne (32), il est prévu de mémoriser la durée totale (ΔT2) de l'arrêt de l'engin ferroviaire (10) ou de l'arrêt du moteur à combustion interne (32), et il est prévu de déterminer la durée avant arrêt (ΔT1) pour un prochain arrêt automatique en fonction de ladite durée totale (ΔT2).

8. Procédé de pilotage selon la revendication 7, dans lequel chaque journée, la durée avant arrêt (ΔT1) pour le premier arrêt automatique du moteur à combustion interne (32) est prédéterminée, et la durée avant arrêt (ΔT1) pour chaque arrêt automatique suivant du moteur à combustion interne (32) est déterminée en fonction de la durée totale (ΔT2) de chaque arrêt automatique ayant eu lieu durant ladite journée uniquement.

9. Procédé de pilotage selon l'une des revendications 1 à 8, dans lequel, avant de commander l'arrêt automatique du moteur à combustion interne (32), il est prévu de signaler au conducteur de l'engin ferroviaire (10) un arrêt prochain du moteur à combustion interne (32).

10. Procédé de pilotage selon l'une des revendications 1 à 9, dans lequel, le moteur à combustion interne (32) étant équipé d'un circuit de liquide de refroidissement (33) et l'engin ferroviaire (10) comportant un réchauffeur (60) de liquide de refroidissement, après l'arrêt automatique du moteur à combustion interne (32), il est prévu de commander l'activation du réchauffeur (60) si la température du liquide de refroidissement (T₃₃) passe sous un seuil (S_{T2}) prédéterminé.

11. Procédé de pilotage selon l'une des revendications 1 à 10, dans lequel, les moyens de freinage (70) étant alimentés en air comprimé par au moins un compresseur (40) via au moins un réservoir d'air (41) et un circuit d'air, après l'arrêt automatique du moteur à combustion interne (32), il est prévu de commander un redémarrage automatique du moteur à combustion interne (32) si la pression (P₄₁) dans le réservoir d'air (41) ou dans le circuit d'air passe sous un seuil (S_{P}) prédéterminé.

12. Procédé de pilotage selon la revendication 11, dans lequel, lorsque l'engin ferroviaire (10) est associé à au moins un autre engin ferroviaire du même type au sein d'un même train, après l'arrêt automatique des moteurs à combustion interne (32) des engins ferroviaires, il est prévu de commander un redémarrage automatique du moteur à combustion interne (32) d'un seul des engins ferroviaires si la pression (P₄₁) dans le réservoir d'air (41) ou dans le circuit d'air passe sous un seuil (S_{P}) prédéterminé.

13. Engin ferroviaire (10) comportant des roues (11), un moteur à combustion interne (32) de traction adapté à entraîner les roues (11) en rotation, et des moyens de freinage (70) des roues (11), **caractérisé en ce qu'**il comporte une unité de pilotage (20) programmée pour mettre en oeuvre un procédé de pilotage conforme à l'une des revendications précédentes.

## Patentansprüche

1. Verfahren zum Steuern eines Schienenfahrzeugs (10) mit einem Verbrennungsmotor (32) zum Antreiben des Schienenfahrzeugs (10), einem Anlasser, der geeignet ist, den Verbrennungsmotor (32) anzulassen, einer Akkumulatorbatterie, die geeignet ist, elektrische Energie an den Anlasser zu liefern, und Mitteln (70) zum Bremsen der Räder des Schienenfahrzeugs (10), wobei die Bremsmittel (70) in einen gelösten Zustand, einen fest angezogenen Zustand und jeden beliebigen Zwischenzustand zwischen dem gelösten und dem fest angezogenen Zustand gesteuert werden können, wobei das Verfahren dann, wenn der Verbrennungsmotor (32) gestartet ist, die Schritte
- Erfassen des Zustands der Bremsmittel (70) und
- Steuern eines automatischen Stoppens des Verbrennungsmotors (32), wenn mindestens eine Stoppbedingung während einer vorbestimmten Dauer (ΔT1) vor dem Stoppen erfüllt ist, wobei die mindestens eine Stoppbedingung ist, daß die Bremsmittel (70) in den fest angezogenen Zustand gesteuert sind,
aufweist,
**dadurch gekennzeichnet, daß** die Dauer (ΔT1) vor dem Stoppen in Abhängigkeit von der erforderlichen Dauer für das Aufladen der Akkumulatorbatterie, nachdem sie für das Anlassen des Verbrennungsmotors (32) entladen worden ist, bestimmt wird.

2. Steuerungsverfahren gemäß Anspruch 1, wobei eine weitere Stoppbedingung ist, daß die Geschwindigkeit (V₁₀) des Schienenfahrzeugs (10) Null oder kleiner als eine vorbestimmte Schwelle (Sv) ist.

3. Steuerungsverfahren gemäß einem der Ansprüche 1 und 2, wobei eine weitere Stoppbedingung ist, daß die Drehzahl (R₃₂) und/oder die Last (C₃₂) des Verbrennungsmotors (32) kleiner als eine vorbestimmte Schwelle (S_{R}, S_{C}) ist.

4. Steuerungsverfahren gemäß einem der Ansprüche 1 bis 3, wobei, wenn die Bremsmittel (70) durch mindestens einen Kompressor (40) über mindestens einen Luftbehälter (41) und einen Luftkreis mit Druckluft versorgt werden, eine weitere Stoppbedingung ist, daß jeder Kompressor (40) stillsteht oder daß der Druck (P₄₁) im Luftbehälter (41) oder im Luftkreis größer als eine vorbestimmte Schwelle ist.

5. Steuerungsverfahren gemäß einem der Ansprüche 1 bis 4, wobei, wenn der Verbrennungsmotor (32) mit einem durch eine Akkumulatorbatterie mit elektrischem Strom versorgten Anlasser (31) ausgestattet ist, eine weitere Stoppbedingung ist, daß der Ladezustand (SOC₃₀) der Akkumulatorbatterie (30) größer als eine vorbestimmte Schwelle (S_{S1}) ist.

6. Steuerungsverfahren gemäß einem der Ansprüche 1 bis 5, wobei, wenn der Verbrennungsmotor (32) mit einem Kühlflüssigkeitskreislauf (33) ausgestattet ist, eine weitere Stoppbedingung ist, daß die Temperatur (T₃₃) der Kühlflüssigkeit größer als eine vorbestimmte Schwelle (S_{T1}) ist.

7. Steuerungsverfahren gemäß einem der Ansprüche 1 bis 6, wobei nach jedem Stoppen des Verbrennungsmotors (32) vorgesehen ist, die Gesamtdauer (ΔT2) des Anhaltens des Schienenfahrzeugs (10) oder des Stoppens des Verbrennungsmotors (32) zu speichern, und daß vorgesehen ist, die Dauer (ΔT1) vor dem Stoppen für ein automatisches Stoppen in Abhängigkeit von der Gesamtdauer (ΔT2) zu bestimmen.

8. Steuerungsverfahren gemäß Anspruch 7, wobei jeden Tag die Dauer (ΔT1) vor dem Stoppen für das erste automatische Stoppen des Verbrennungsmotors (32) vorbestimmt wird und die Dauer (ΔT1) vor dem Stoppen für jedes weitere automatische Stoppen des Verbrennungsmotors (32) in Abhängigkeit von der Gesamtdauer (ΔT2) jedes automatischen Stoppens, das nur während des besagten Tags stattgefunden hat, zu bestimmen.

9. Steuerungsverfahren gemäß einem der Ansprüche 1 bis 8, wobei vor dem automatischen Stoppen des Verbrennungsmotors (32) vorgesehen ist, dem Fahrer des Schienenfahrzeugs (10) ein nächstes Stoppen des Verbrennungsmotors (32) anzuzeigen.

10. Steuerungsverfahren gemäß einem der Ansprüche 1 bis 9, wobei, wenn der Verbrennungsmotor (32) mit einem Kühlflüssigkeitskreislauf (33) ausgestattet ist und das Schienenfahrzeug (10) einen Kühlflüssigkeitswärmer (60) aufweist, vorgesehen ist, nach dem automatischen Stoppen des Verbrennungsmotors (32) das Aktivieren des Wärmers (60) zu veranlassen, wenn die Temperatur (T₃₃) der Kühlflüssigkeit unter eine vorbestimmte Schwelle (S_{T2}) fällt.

11. Steuerungsverfahren gemäß einem der Ansprüche 1 bis 10, wobei, wenn die Bremsmittel (70) durch mindestens einen Kompressor (40) über mindestens einen Luftbehälter (41) und einen Luftkreis mit Druckluft versorgt werden, nach dem automatischen Stoppen des Verbrennungsmotors (32) vorgesehen ist, ein automatisches Wiederanlassen des Verbrennungsmotors (32) zu veranlassen, wenn der Druck (P₄₁) im Luftbehälter (41) oder im Luftkreis unter eine vorbestimmte Schwelle (S_{P}) fällt.

12. Steuerungsverfahren gemäß Anspruch 11, wobei, wenn das Schienenfahrzeug (10) in einem selben Zug mit einem weiteren Schienenfahrzeug desselben Typs verbunden ist, nach dem automatischen Stoppen der Verbrennungsmotoren (32) der Schienenfahrzeuge vorgesehen ist, ein automatisches Wiederanlassen des Verbrennungsmotors (32) eines einzigen der Schienenfahrzeuge zu veranlassen, wenn der Druck (P₄₁) im Luftbehälter (41) oder im Luftkreis unter eine vorbestimmte Schwelle (S_{P}) fällt.

13. Schienenfahrzeug (10) mit Rädern (11), einem Antriebsverbrennungsmotor (32), der geeignet ist, die Räder in Drehung zu versetzen, und Mitteln (70) zum Bremsen der Räder (11), wobei es eine Steuerungseinheit (20) aufweist, die dazu programmiert ist, ein Steuerungsverfahren gemäß einem der vorangehenden Ansprüche durchzuführen.

## Claims

1. A method for controlling a railway vehicle (10) including an internal combustion engine (32) for propelling the railway vehicle (10), a starter suitable for starting the internal combustion engine (32), a battery suitable for providing electrical power to the starter, and means (70) for braking the wheels of the railway vehicle (10), wherein the braking means (70) can be operated to a released state, an applied state or in any intermediate state between the applied state and the released state, the method including, when the internal combustion engine (32) is started, steps of:
- acquiring the state of the braking means (70), and of
- operating an automatic stop of the internal combustion engine (32) if at least one stop condition is fulfilled for a determined duration before stop (ΔT1), said at least one stop condition being that the brake means (70) are operated to the applied state,
**characterized in that** said duration before stop (ΔT1) is determined as a function of the duration required to charge the battery after the latter has been discharged to restart the internal combustion engine (32).

2. The controlling method according to claim 1, wherein another stop condition is that the speed (V₁₀) of the railway vehicle (10) is zero or lower than a predetermined threshold (Sv).

3. The controlling method according to one of claims 1 and 2, wherein another stop condition is that the speed (R₃₂) and/or load (C₃₂) of the internal combustion engine (32) is lower than a predetermined threshold (S_{R}, S_{C}).

4. The controlling method according to one of claims 1 to 3, wherein, the braking means (70) being fed with compressed air by at least one compressor (40) via at least one air tank (41) and one air circuit, another stop condition is that each compressor (40) is stopped or that the pressure (P₄₁) in the air tank (41) or in the air circuit is higher than a predetermined threshold.

5. The controlling method according to one of claims 1 to 4, wherein, the internal combustion engine (32) being equipped with a starter (31) power supplied by a battery (30), another stop condition is that the charge level (SOC₃₀) of said battery (30) is higher than a predetermined threshold (S_{S1}).

6. The controlling method according to one of claims 1 to 5, wherein, the internal combustion engine (32) being equipped with a cooling liquid circuit (33), another stop condition is that the temperature (T₃₃) of the cooling liquid is higher than a predetermined threshold (S_{T1}).

7. The controlling method according to one of claims 1 to 6, wherein, after each automatic stop of the internal combustion engine (32), it is provided to memorize the total stop duration (ΔT2) of the railway vehicle (10) or of the internal combustion engine (32), and it is provided to determine the duration before stop (ΔT1) for a next automatic stop as a function of said total duration (ΔT2).

8. The controlling method according to claim 7, wherein, each day, the duration before stop (ΔT1) for the first automatic stop of the internal combustion engine (32) is predetermined, and the duration before stop (ΔT1) for each following automatic stop of the internal combustion engine (32) is determined as a function of the total duration (ΔT2) of each automatic stop that occurred during that day only.

9. The controlling method according to one of claims 1 to 8, wherein, before operating the automatic stop of the internal combustion engine (32), it is provided to signal to the driver of the railway vehicle (10) a next stop of the internal combustion engine (32).

10. The controlling method according to one of claims 1 to 9, wherein, the internal combustion engine (32) being equipped with a cooling liquid circuit (33) and the railway vehicle (10) including a cooling liquid heater (60), after the automatic stop of the internal combustion engine (32), it is provided to operate activation of the heater (60) if the cooling liquid temperature (T₃₃) falls under a predetermined threshold (S_{T2}).

11. The controlling method according to one of claims 1 to 10, wherein, the braking means (70) being fed with compressed air by at least one compressor (40) via at least one air tank (41) and one air circuit, after the automatic stop of the internal combustion engine (32), it is provided to operate an automatic restart of the internal combustion engine (32) if the pressure (P₄₁) in the air tank (41) or in the air circuit falls under a predetermined threshold (S_{P}).

12. The controlling method according to claim 11, wherein, when the railway vehicle (10) is associated with at least one other railway vehicle of the same type within a same train, after the automatic stop of the internal combustion engines (32) of the railway vehicles, it is provided to operate an automatic restart of the internal combustion engine (32) of a single one of the railway vehicles if the pressure (P₄₁) in the air tank (41) or in the air circuit falls under a predetermined threshold (SP).

13. A railway vehicle (10) having wheels (11), a traction internal combustion engine (32) suitable for rotating the wheels (11), and means (70) for braking the wheels (11), **characterized in that** it has a control unit (20) programmed to implement a controlling method according to one of the preceding claims.
